# EUROPÄISCHE PATENTANMELDUNG

(11) **EP 0 955 648 A2**
(43) Veröffentlichungstag der Anmeldung: **10.11.1999**
(21) Anmeldenummer: 99108075.5
(22) Anmeldetag: 23.04.1999
(51) Int. Cl.: H01G 4/32

(54) **Kondensatorwickel, Verfahren und Vorrichtung zur Herstellung desselben sowie Wickelkondensator mit demselben**

(30) Priorität: 23.04.1998 DE 19818247; 12.02.1999 DE 19905978
(71) Anmelder: FRAKO Kondensatoren- und Anlagenbau GmbH, 79331 Teningen (DE)
(72) Erfinder: Reinbold, Hans Georg, 79350 Sexau (DE)
(74) Vertreter: Winkler, Andreas, Dr.

(57) **Zusammenfassung**

Kondensatorwickel, der aus zwei einseitig mit einer Metallschicht und einem metallfreien Randstreifen versehenen Kunststoffolien gleicher Breite, die derart übereinander angeordnet sind, daß die Metallschichten in dieselbe Richtung zeigen, die Randstreifen sich aber an entgegengesetzten Längsseiten der Kunststoffolien befinden, in der Weise auf einen Wickelkern gewickelt ist, daß ein Versetz zwischen den Kunststoffolien quer zur Längsseite derselben besteht, wodurch die metallbeschichteten Ränder der beiden Kunststoffolien über die metallfreien Randstreifen überstehen, dadurch gekennzeichnet, daß an beiden Stirnseiten des Kondensatorwickels die Lage der jeweiligen überstehenden Kunststoffolie periodisch um einen Versatzmittelwert mit einer jeweiligen Schwankungsamplitude und Schwankungsperiode schwankt, mit demselben Verfahren und Vorrichtung zur Herstellung desselben sowie Wickelkondensator

## Beschreibung

Die vorliegende Erfindung betrifft einen Kondensatorwickel, der aus zwei einseitig mit einer Metallschicht und einem metallfreien Randstreifen versehenen Kunststoffolien gleicher Breite, die derart übereinander angeordnet sind, daß die Metallschichten in dieselbe Richtung zeigen, die Randstreifen sich aber an entgegengesetzten Längsseiten der Kunststoffolien befinden, in der Weise auf einen Wickelkern gewickelt ist, daß ein Versatz zwischen den Kunststoffolien quer zur Längsseite derselben besteht, wodurch die metallbeschichteten Ränder der beiden Kunststoffolien über die metallfreien Randstreifen überstehen.

Bei derartigen Kondensatorwickeln hängt die Stoßstrombelastung eines daraus hergestellten Wickelkondensators hauptsächlich davon ab, wie gut die Kontaktierung zwischen einer jeweiligen Kontaktbrücke und der jeweiligen Metallschicht ist. Diese kann im Idealfall so hoch sein, wie das Stromführungsvermögen der Metallschichtdicke ist. Wie sich anhand von Tests herausgestellt hat, weisen herkömmliche Kondensatorwickel, bei denen ein bestimmter Versatz mit einer besonders hohen Genauigkeit eingehalten wird, gegenüber Kondensatorwikkeln, bei denen der Versatz unbeabsichtigt unregelmäßige Schwankungen aufweist, eine geringere Stoßstrombelastbarkeit auf. Darüber hinaus weisen in herkömmlicher Weise hergestellte Kondensatorwickel eine große Streuung hinsichtlich der maximalen Stoßstrombelastbarkeit auf.

Der Erfindung liegt somit die Aufgabe zugrunde, den gattungsgemäßen Wickelkondensator derart weiterzubilden, daß er eine größere Stoßstrombelastbarkeit aufweist und die Kondensatorwickel untereinander eine geringere Streuung hinsichtlich der maximalen Stoßstrombelastbarkeit aufweisen, ein Verfahren und eine Vorrichtung zur Herstellung desselben und einen Wickelkondensator mit demselben bereitzustellen.

Erfindungsgemäß wird diese Aufgabe bei dem Kondensatorwickel gemäß einer ersten Lösung dadurch gelöst, daß an beiden Stirnseiten des Kondensatorwickels die Lage der jeweiligen überstehenden Kunststoffolie periodisch um einen Versatzmittelwert mit einer jeweiligen Schwaukungsamplitude und Schwankungsperiode schwankt.

Ferner wird diese Aufgabe gemäß einer zweiten Lösung dadurch gelöst, daß an beiden Stirnseiten des Kondensatorwickels die jeweils überstehende Kunststoffolie einen Wellenschnitt mit einer jeweiligen Wellenschnittamplitude und Wellenschnittperiode aufweist.

Diese Aufgabe wird zudem bei dem Verfahren gemäß einer ersten Lösung dadurch gelöst, daß zwei Kunststoffolien einem Wickelkern mit einem seitlichen Versatz zueinander kontinuierlich zugeführt und auf diesen gewickelt werden, wobei die Zuführrichtungen beider Kunststoffolien im jeweiligen Zuführbereich periodisch um eine jeweilige mittlere Zuführrichtung in der jeweiligen Zuführebene verändert werden.

Weiterhin wird diese Aufgabe bei dem Verfahren gemäß einer zweiten Lösung dadurch gelöst, daß zwei Kunststoffolien einem Wickelkern mit einem seitlichen Versatz zueinander kontinuierlich zugeführt und auf diesen gewickelt werden, wobei der Wickelkern und ggf. zugehörige Anpreßrollen periodisch um eine mittlere Lage entlang der Achse des Wickelkerns verschoben wird/werden.

Darüber hinaus wird diese Aufgabe bei der Vorrichtung gemäß einer ersten Lösung gelöst durch zwei drehbare Aufnahmeeinrichtungen zur Aufnahme einer jeweiligen Kunststoffolienversorgungsrolle, eine drehbare Wickelkernaufnahmeeinrichtung zur Aufnahme des Wickelkerns sowie ggf. vorhandene Anpreßrollen, einen Wickelmotor zum Antreiben der Wickelkernaufnahmeeinrichtung, und eine Umlenkrolle für jede Kunstoffolienbahn, die sich in unmittelbarer Nähe der Wickelkernaufnahmeeinrichtung befindet und um eine zu ihrer Längsachse senkrechte Achse drehbar ist.

Außerdem wird diese Aufgabe bei der Vorrichtung gemäß einer zweiten Lösung gelöst durch zwei drehbare Aufnahmeeinrichtungen zur Aufnahme einer jeweiligen Kunststoffolienversorgungsrolle, eine drehbare Wickelkernaufnahmeeinrichtung zur Aufnahme des Wickelkerns sowie ggf. vorhandene Anpreßrollen, wobei die Wickelkernaufnahmeeinrichtung mitsamt den ggf. vorhandenen Anpreßrollen entlang ihrer Drehachse verschiebbar ist, eine Umlenkrolle für jede Kunststoffolienbahn, die sich in unmittelbarer Nähe der Wickelkernaufnahmeeinrichtung befindet, und einen Wickelmotor zum Antreiben der Wickelkernaufnahmeeinrichtung.

Darüber hinaus wird diese Aufgabe durch einen Wickelkondensator mit einem Kondensatorwickel nach Anspruch 1 oder 2 gelöst.

Bei dem Kondensatorwickel gemäß der ersten Lösung kann vorgesehen sein, daß die Schwankungsamplituden an den beiden Stirnseiten des Kondensatorwickels identisch sind.

Andererseits kann auch vorgesehen sein, daß die Schwankungsamplituden an den beiden Stirnseiten des Kondensatorwickels unterschiedlich sind.

Weiterhin kann vorgesehen sein, daß die Schwankungsperioden an den beiden Stirnseiten des Kondensatorwickels identisch sind.

Alternativ kann auch vorgesehen sein, daß die Schwankungsperioden an den beiden Stirnseiten des Kondensatorwickels unterschiedlich sind.

Darüber hinaus kann vorgesehen sein, daß die Lageschwankungen an beiden Stirnseiten des Kondensatorwickels zueinander phasenverschoben sind.

Günstigerweise sind die Schwankungsamplituden kleiner als der Versatzmittelwert. Dies verhindert einen sogenannten negativen Versatz.

Vorzugsweise liegen die Schwankungsperioden im Bereich von 5 bis 20 Windungen. Damit ist gemeint, daß die Lageschwankungen sich über einen Wert im Bereich von 5 bis 20 Windungen der Kunststoffolien um den Wickelkern periodisch wiederholen. Die Schwankungsperiode ist dabei unter anderem von dem Kondensatorwickeltyp abhängig.

Gemäß einer besonderen Ausführungsform der Erfindung kann vorgesehen sein, daß die Schwankungen sinusförmig verlaufen.

Weiterhin kann vorgesehen sein, daß der Versatzmittelwert eine Drift aufweist. Eine Drift ist normalerweise durch ein Taumeln der Versorgungsrollen bedingt und kann z.B. bei einem Versatzmittelwert von 1 mm im Bereich von 0,5 bis 1,5 mm über mehrere tausend Windungen liegen.

Gemäß einer weiteren besonderen Ausführungsform der Erfindung kann vorgesehen sein, daß der Versatzmittelwert keine Drift aufweist. Dies ist möglich, indem die Drift gezielt kompensiert wird.

Weiterhin kann vorgesehen sein, daß die Randstreifen eine Breite im Bereich von 1,5 mm bis 3 mm aufweisen. Die Breite der Randstreifen kann in Abhängigkeit von der Nennspannung des Kondensators zwischen etwa 1 mm und mehreren mm betragen, wobei die Breite mit zunehmender Nennspannung größer zu wählen ist. Ein typischer Breitenwert für eine Nennspannung eines daraus hergestellten Kondensators im Bereich von zwischen 400 V und 600 V beträgt 2,5 mm.

Vorzugsweise beträgt der Versatzmittelwert 1 mm.

Vorteilhafterweise liegen die Schwankungsamplituden im Bereich von 0,2 mm bis 0,4 mm. Z.B. kann die maximale Versatzschwankung über eine Periode 0,3 mm betragen. Wenn der Versatzmittelwert 1 mm beträgt, liegt die gezielt aufgeprägte Versatzschwankung innerhalb der Drift.

Vorzugsweise bestehen die Kunststoffolien aus PP-Material.

Dabei kann vorgesehen sein, daß die Metallschichten durch Bedampfen aufgebracht sind.

Günstigerweise sind an den Stirnseiten desselben elektrisch leitfähige Kontaktbrücken vorgesehen.

Dabei kann vorgesehen sein, daß die Kontaktbrücken aufgespritzt sind.

Bei dem Kondensatorwickel gemäß der zweiten Lösung kann vorgesehen sein, daß die Kunststoffolien in der Weise auf den Wickelkern gewickelt sind, daß die Metallschichten zur Mantelfläche des Kondensatorwickels zeigen.

Bei dem Kondensatorwickel kann vorgesehen sein, daß die Wellenschnittamplituden an den beiden Stirnseiten des Kondensatorwickels identisch sind.

Andererseits kann auch vorgesehen sein, daß die Wellenschnittamplituden an den beiden Stirnseiten des Kondensatorwickels unterschiedlich sind.

Weiterhin kann vorgesehen sein, daß die Wellenschnittperioden an den beiden Stirnseiten des Kondensatorwickels identisch sind.

Alternativ kann auch vorgesehen sein, daß die Wellenschnittperioden an den beiden Stirnseiten des Kondensatorwickels unterschiedlich sind.

Darüber hinaus kann vorgesehen sein, daß die Wellenschnittverläufe an beiden Stirnseiten des Kondensatorwickels zueinander phasenverschoben sind.

Günstigerweise sind die Wellenschnittamplituden kleiner als der Versatz. Dies verhindert einen sogenannten negativen Versatz.

Vorteilhafterweise ist die Wellenschnittperiode mindestens einer Kunststoffolie im Bereich des äußeren Umfangs des Kondensatorwickels nicht kleiner als der äußere Umfang des Kondensatorwickels. Wenn nämlich die Wellenschnittperiode wesentlich kleiner als der äußere Umfang des Kondensatorwickels ist, besteht die Gefahr, daß die Wellenschnittperiode jedes Mal dann, wenn ein geradzahliges Vielfaches der Wellenschnittperiode genau dem Umfang des Kondensatorwickels entspricht, die Schnittwellen über eine Reihe von Windung mehr oder weniger in Phase sind. Die Wellenschnittperiode ist dabei unter anderem von dem Kondensatorwickeltyp abhängig.

Dabei kann vorgesehen sein, daß die Wellenschnittperiode der Kunststoffolie im Bereich von 1,1 bis 20 Windungen der Kunststoffolie liegt.

Insbesondere kann dabei vorgesehen sein, daß die Wellenschnittperiode vom Inneren des Kondensatorwickels zum Äußeren des Kondensatorwickels abnimmt. Beispielsweise kann die Wellenschnittperiode am äußeren Umfang des Kondensatorwickels 1,1 Windungen im jeweiligen Durchmesserbereich betragen und nachfolgend zum Inneren des Kondensatorwickels hin auf 20 Windungen im jeweiligen Durchmesserbereich ansteigen. Dies kann sich ergeben, wenn die absolute Größe, d.h. die Länge der Wellenschnittperiode konstant ist.

Besonders vorteilhaft liegt die Wellenschnittperiode im Bereich von 1,1 bis 1,5 Windung der Kunststoffolie. Dieser Bereich zeichnet sich dadurch aus, daß hier im Prinzip niemals zwei aufeinanderfolgende Windungen einen phasengleichen Wellenschnitt aufweisen.

Eine besonders vorteilhafte Ausführungsform ist dadurch gekennzeichnet, daß die Wellenschnittperiode der Kunststoffolie konstant ist. Insbesondere kann die Wellenschnittperiode der Kunststoffolie in einem jeweiligen Durchmesserbereich des Kondensatorwickels das 1,2-fache der Windung in dem jeweiligen Durchmesserbereich betragen. Dies bedeutet, daß die absolute Größe, d.h. die Länge der Wellenschnittperiode in Abhängigkeit von dem Durchmesser des Kondensatorwickels gesteuert werden muß.

Gemäß einer besonderen Ausführungsform der Erfindung kann vorgesehen sein, daß die Wellenschnitte sinusförmig verlaufen.

Weiterhin kann vorgesehen sein, daß der Versatz eine Drift aufweist. Eine Drift ist normalerweise durch ein Taumeln der Versorgungsrollen bedingt und kann z.B. bei einem Versatz von 1 mm im Bereich von 0,5 bis 1,5 mm über mehrere tausend Windungen liegen.

Gemäß einer weiteren besonderen Ausführungsform der Erfindung kann vorgesehen sein, daß der Versatz keine Drift aufweist. Dies ist möglich, indem die Drift gezielt kompensiert wird.

Weiterhin kann vorgesehen sein, daß die metallfreien Randstreifen eine Breite im Bereich von 1,5 mm bis 3 mm aufweisen. Die Breite der metallfreien Randstreifen kann in Abhängigkeit von der Nennspannung des Kondensators zwischen etwa 1 mm und mehreren mm betragen, wobei die Breite mit zunehmender Nennspannung größer zu wählen ist. Ein typischer Breitenwert für eine Nennspannung eines daraus hergestellten Kondensators im Bereich von zwischen 400 V und 600 V beträgt 2,5 mm.

Vorzugsweise beträgt der Versatz 1 mm.

Vorteilhafterweise liegen die Wellenschnittamplituden im Bereich von 0,2 mm bis 0,4 mm. Z.B. kann die maximale Lageschwankung des Randes über eine Periode 0,3 mm betragen. Wenn der Versatz 1 mm beträgt, liegt die Lageschwankung des Randes innerhalb der Drift.

Vorzugsweise bestehen die Kunststoffolien aus PP-Material.

Dabei kann vorgesehen sein, daß die Metallschichten durch Bedampfen aufgebracht sind.

Günstigerweise sind an den Stirnseiten desselben elektrisch leitfähige Kontaktbrücken vorgesehen.

Schließlich kann vorgesehen sein, daß die Kontaktbrücken aufgespritzt sind.

Bei dem Verfahren gemäß der ersten Lösung kann vorgesehen sein, daß beide Zuführrichtungen mit derselben Winkelamplitude verändert werden.

Weiterhin kann dabei vorgesehen sein, daß beide Zuführrichtungen mit derselben Periode verändert werden.

Ferner kann auch vorgesehen sein, daß die Zuführrichtungen zueinander phasenverschoben verändert werden.

Günstigerweise sind die Winkelamplituden derart gewählt, daß die resultierende Schwankungsamplitude kleiner als der Versatzmittelwert ist.

Außerdem kann vorgesehen sein, daß die Perioden im Bereich von 5 bis 20 Windungen liegen.

Gemäß einer weiteren besonderen Ausführungsform des erfindungsgemäßen Verfahrens gemäß der ersten Lösung kann vorgesehen sein, daß die Zuführrichtungen derart verändert werden, daß die Versatzschwankung sinusförmig ist.

Außerdem kann vorgesehen sein, daß die Zuführrichtungen derart verändert werden, daß eine Drift kompensiert wird.

Vorteilhafterweise beträgt der Versatzmittelwert 1 mm.

Günstigerweise liegt die resultierende Schwankungsamplitude im Bereich von 0,2 bis 0,4 mm.

Bei dem Verfahren gemäß der zweiten Lösung kann vorgesehen sein, daß die resultierende Schwankungsamplitude kleiner als der Versatzmittelwert ist.

Günstigerweise liegt die Periode der Verschiebung im Bereich von 5 bis 20 Windungen.

Vorteilhafterweise wird der Wickelkern derart verschoben, daß die Versatzschwankung sinusförmig ist.

Weiterhin kann vorgesehen sein, daß eine Drift kompensiert wird.

Vorzugsweise beträgt der Versatzmittelwert 1 mm.

Außerdem kann vorgesehen sein, daß die resultierende Schwankungsamplitude im Bereich von 0,2 bis 0,4 mm liegt.

Die Vorrichtung gemäß der ersten Lösung kann jeweils eine Dreheinrichtung für die beiden drehbaren Umlenkrollen umfassen, die mechanisch oder elektrisch mit dem Wickelmotor gekoppelt sind.

Insbesondere kann dabei vorgesehen sein, daß die Dreheinrichtungen über jeweils einen Exzenter oder eine Nockenscheibe mit dem Wickelmotor mechanisch gekoppelt sind.

Außerdem kann vorgesehen sein, daß die Dreheinrichtungen über eine jeweilige Übersetzungseinrichtung mit dem Wickelmotor gekoppelt sind.

Dabei kann vorgesehen sein, daß die Übersetzungeinrichtungen jeweils einen Keilriemen mit einer Varioscheibe umfassen.

Weiterhin kann eine besondere Ausführungsform der Erfindung gekennzeichnet sein durch einen zusätzlichen Motor zum Antreiben der beiden Dreheinrichtungen.

Insbesondere kann dabei ein Frequenzumrichter für den zusätzlichen Motor vorgesehen sein, der synchron zu einem Wickelmotorfrequenzumrichter steuerbar ist.

Bei der Vorrichtung gemäß der zweiten Lösung kann eine Verschiebeeinrichtung für die Wickelkernaufnahmeeinrichtung sowie die ggf. vorhandenen Anpreßrollen vorgesehen sein, die mechanisch oder elektrisch mit dem Wickelmotor gekoppelt ist.

Insbesondere kann dabei vorgesehen sein, daß die Verschiebeinrichtung über einen Exzenter oder eine Nockenscheibe mit dem Wickelmotor mechanisch gekoppelt ist.

Weiterhin kann auch vorgesehen sein, daß die Verschiebeeinrichtung über eine jeweilige Übersetzungseinrichtung mit dem Wickelmotor gekoppelt ist.

Insbesondere kann dabei vorgesehen sein, daß die Übersetzungseinrichtung einen Keilriemen mit einer Varioscheibe umfaßt.

Eine weitere besondere Ausführungsform der erfindungsgemäßen Vorrichtung gemäß der zweiten Lösung ist gekennzeichnet durch einen Frequenzumrichter für den zusätzlichen Motor, der synchron zu einem Wickelmotorfrequenzumrichter ansteuerbar ist.

Der Erfindung liegt die überraschende Erkenntnis zugrunde, daß Kondensatorwickel mit einer gezielt erzeugten periodischen Lageschwankung der Kante der jeweiligen überstehenden Kunststoffolie mit metallbeschichtetem Rand eine deutlich höhere Stoßstrombelastbarkeit aufweisen als Kondensatorwickel mit einem konstanten Versatz, wie er bisher als notwendig angesehen wurde. Darüber hinaus weisen derartige Kondensatorwickel untereinander eine geringe Streuung hinsichtlich ihrer maximalen Stoßstrombelastbarkeit auf.

Weitere Merkmale und Vorteile der Erfindung ergeben sich aus den Ansprüchen und aus der nachstehenden Beschreibung, in der Ausführungsbeispiele anhand der schematischen Zeichnungen im einzelnen erläutert sind. Dabei zeigt:
Fig. 1 eine Übersicht von einer Ausführungsform des erfindungsgemäßen Kondensatorwickels;
Fig. 2a eine detaillierte Schnittansicht des Kondensatorwickels von Fig. 1;
Fig. 2b einen vergrößerten Ausschnitt von Fig. 2a;
Fig. 3 eine Aufsicht auf zwei Kunststoffolien eines herkömmlichen Kondensatorwickels;
Fig. 4 eine Übersicht von einer Ausführungsform der erfindungsgemäßen Vorrichtung;
Fig. 5a eine detaillierte Ansicht einer besonderen Ausführungsform der Vorrichtung von Fig. 4;
Fig. 5b eine Aufsicht auf eine Umlenkrolle von Fig. 5a;
Fig. 6 eine weitere detaillierte Ansicht einer weiteren besonderen Ausführungsform der Vorrichtung von Fig. 4; und
Fig. 7 eine Aufsicht auf einen Kondensatorwickel gemäß einer weiteren besonderen Ausführungsform der Erfindung.

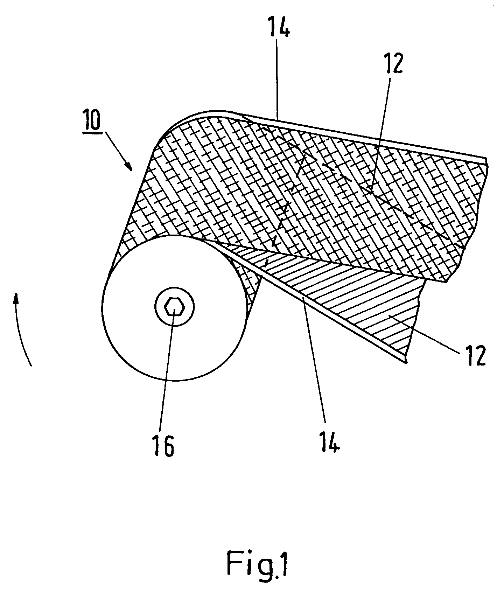

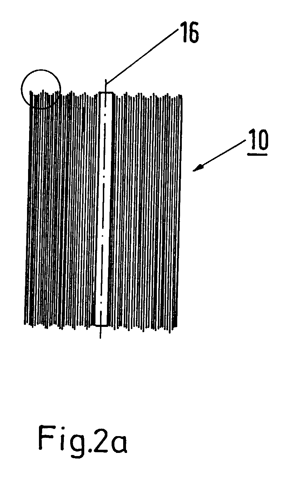

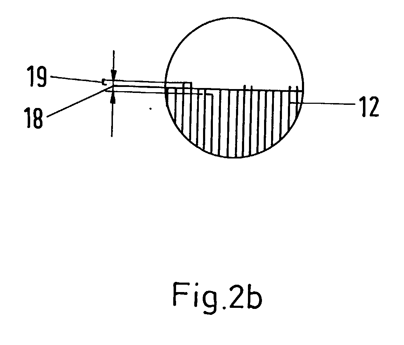

Fig. 1 zeigt eine Übersicht von einer Ausführungsform des erfindungsgemäßen Kondensatorwickels. Ein Kondensatorwickel 10 besteht aus zwei einseitig mit einer Metallschicht bedampften Kunststoffolien 12, die jeweils einen metallfreien Randstreifen 14 mit einer Breite von ca. 2,5 mm aufweisen. Die Metallschicht der Kunststoffolien 12 zeigt zur Mantelfläche des Kondensatorwickels 10. Die Kunststoffolien 12 sind mit einer bezogen auf einen Versatzmittelwert 18 variierenden Lage, wie sie in den Fig. 2a und 2b gezeigt ist, auf einen Wickelkern 16 gewickelt. Ein Pfeil zeigt die Wickelrichtung der Kunststoffolien 12.

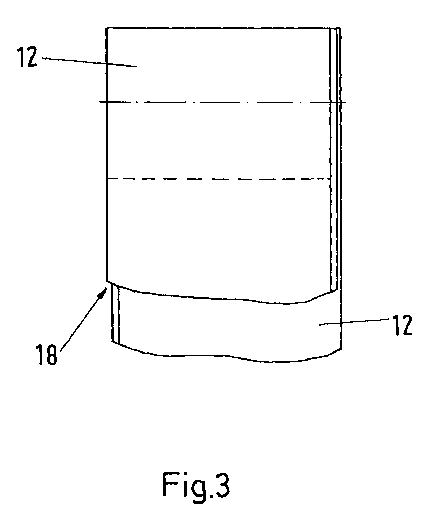

Fig. 2a zeigt eine detaillierte Schnittansicht des Kondensatorwickels von Fig. 1. Wie es aus Fig. 2a ersichtlich ist, schwanken die Lagen der jeweiligen überstehenden Kunststoffolien an beiden Stirnseiten des Kondensatorwickels sinusförmig mit einer jeweiligen Schwankungsamplitude 19 (s. Fig. 2b) um einen Versatzmittelwert 18 von 1 mm, wie er aus Fig. 3 ersichtlich ist.

Fig. 2b zeigt einen vergrößerten Ausschnitt von Fig. 2a. Es ist deutlich zu erkennen, daß die Lage der jeweiligen überstehenden Kunststoffolie sinusförmig um einen Versatzmittelwert 18 schwankt. Im vorliegenden Fall beträgt die Schwankungsamplitude 0,3 mm.

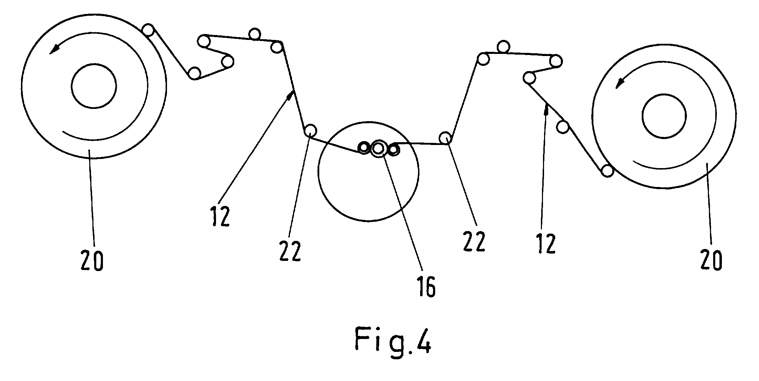

Fig. 4 zeigt eine Übersicht von einer Ausführungsform der erfindungsgemäßen Vorrichtung zur Herstellung des erfindungsgemäßen Kondensatorwickels. Von zwei Kunststoffolienversorgungsrollen 20 werden zwei Kunstoffolien 12 abgewickelt und über mehrere Rollen und über unmittelbar in der Nähe eines Wickelkerns 16 befindliche Umlenkrollen 22 und Anpreßrollen 24 auf einen Wickelkern 16 gewickelt. Der Wickelkern 16 befindet sich in einer Wickelkernaufnahmeeinrichtung (nicht gezeigt) und wird von einem Wickelmotor (nicht gezeigt) zum Antreiben der Wickelkernaufnahmeeinrichtung gedreht.

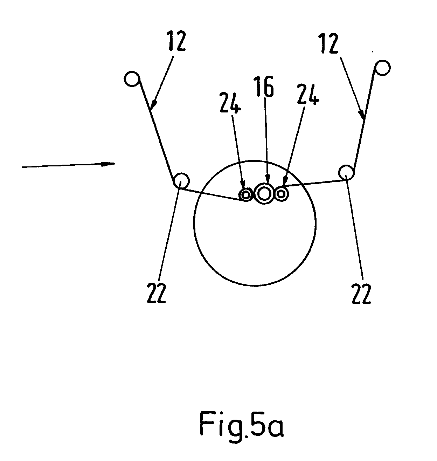

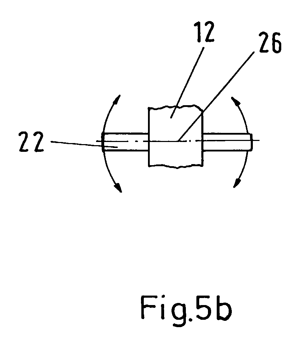

Fig. 5a zeigt eine besondere Ausführungsform der erfindungsgemäßen Vorrichtung von Fig. 4, mit der gezielt Lageschwankungen der jeweiligen überstehenden Kunststoffolie auf beiden Seiten eines Kondensatorwickels erreicht werden. Hierfür sind die Umlenkrollen 22 um eine senkrecht auf der Zeichenebene von Fig. 5b stehende Drehachse (, deren Drehpunkt mit 26 gekennzeichnet ist,) schwenkbar, wie es durch die Pfeile in Fig. 5b angedeutet ist. Durch die Schwenkbewegungen werden die Zuführrichtungen der Kunststoffolien über einen Winkelbereich variiert.

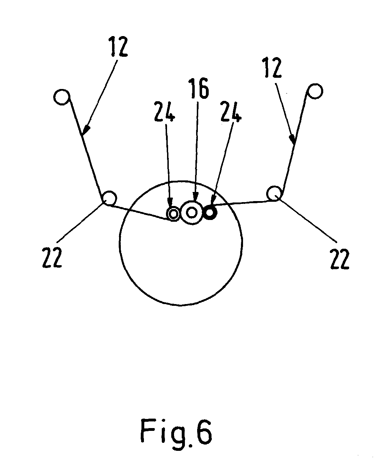

Fig. 6 zeigt eine weitere besondere Ausführungsform der erfindungsgemäßen Vorrichtung von Fig. 4. Bei dieser Ausführungsform ist die Wickelkernaufnahmeeinrichtung (nicht gezeigt) gemeinsam mit einem Wickelkern 16 und Anpreßrollen 24 in Längsrichtung des Wickelkerns 16 verschiebbar. Sowohl bei der in Fig. 5a und 5b als auch bei der in Fig. 6 gezeigten Ausführungsform müssen die Dreh- bzw. Verschiebeeinrichtung (nicht gezeigt) mit dem Wickelmotor (nicht gezeigt) mechanisch oder elektrisch gekoppelt sein, um eine gewünschte Lageschwankung zu erreichen. Vorteilhafterweise kann dies über einen Exzenter oder eine Nockenscheibe geschehen, der/die mit dem Wickelmotor und einer 5- bis 20-fachen Untersetzung gekoppelt ist und bewegt wird. Weiterhin ist es von Vorteil, wenn die Übersetzung variabel gestaltet ist, damit die Periode der Lageschwankung variiert werden kann, um je nach Kondensatorwickeltyp die optimale Stoßstrombelastung zu erreichen. Die veränderbare Übersetzung kann z.B. mit einer Kraftübertragung durch Keilriemen mit Varioscheiben (,deren Durchmesser sich ändern läßt,) erreicht werden. Eine weitere Möglichkeit besteht in einem Antrieb der Dreh- bzw. Verschiebeeinrichtung mittels eines zusätzlichen Motors mit Frequenzumrichter, welcher synchron zum Wickelmotorfrequenzumrichter gesteuert wird, jedoch entsprechend mit niedrigerer, einstellbarer Drehzahl angesteuert wird.

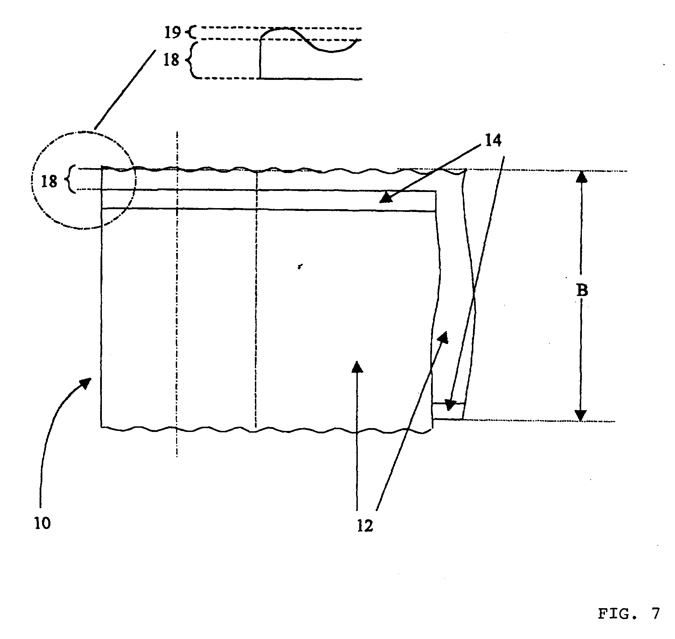

Fig. 7 zeigt einen Kondensatorwickel 10, der aus zwei einseitig mit einer Metallschicht bedampften Kunststoffolien 12 gleicher Breite B besteht, wobei die Breite B als Größtwert der Breite der Kunststoffolien 12 definiert ist, die jeweils einen metallfreien Randstreifen 14 mit einer Breite von ca. 2,5 mm aufweisen. Die Metallschicht der Kunstoffolien 12 zeigt zur Mantelfläche des Kondensatorwickels 10. Zwischen den Kunststoffolien 12 besteht quer zur Längsseite derselben ein Versatz 18 von 1 mm auf, wodurch die metallbeschichteten Ränder der beiden Kunststoffolien über die metallfreien Randstreifen 14 überstehen. An beiden Stirnseiten des Kondensatorwickels 10 weist die jeweils überstehende Kunstoffolie einen sinusförmigen Wellenschnitt mit einer Wellenschnittamplitude 19 von 0,3 mm und einer Wellenschnittperiode auf, die aus Darstellungsgründen wesentlich kleiner als erfindungsgemäß vorgesehen dargestellt ist.

Die in der vorangehenden Beschreibung, in der Zeichnung sowie in den Ansprüchen offenbarten Merkmale der Erfindung können sowohl einzeln als auch in beliebiger Kombination für die Verwirklichung der Erfindung in ihren verschiedenen Ausführungsformen wesentlich sein.

### Bezugszeichenliste

- 10: Kondensatorwickel
- 12: Kunststoffolie
- 14: Randstreifen
- 18: Versatzmittelwert/Versatz
- 19: Schwankungsamplitude/Wellenschnittamplitude
- 20: Kunststoffversorgungsrolle
- 24: Umlenkrolle
- 26: Drehpunkt

## Patentansprüche

1. Kondensatorwickel (10), der aus zwei einseitig mit einer Metallschicht und einem metallfreien Randstreifen (14) versehenen Kunststoffolien (12) gleicher Breite, die derart übereinander angeordnet sind, daß die Metallschichten in dieselbe Richtung zeigen, die Randstreifen (14) sich aber an entgegengesetzten Längsseiten der Kunststoffolien (12) befinden, in der Weise auf einen Wickelkern (16) gewickelt ist, daß ein Versetz zwischen den Kunststoffolien (12) quer zur Längsseite derselben besteht, wodurch die metallbeschichteten Ränder der beiden Kunststoffolien (12) über die metallfreien Randstreifen (14) überstehen, dadurch gekennzeichnet, daß an beiden Stirnseiten des Kondensatorwickels (10) die Lage der jeweiligen überstehenden Kunststoffolie (12) periodisch um einen Versatzmittelwert (18) mit einer jeweiligen Schwankungsamplitude (19) und Schwankungsperiode schwankt.

2. Kondensatorwickel (10), der aus zwei einseitig mit einer Metallschicht und einem metallfreien Randstreifen (14) versehenen Kunststoffolien (12) gleicher Breite, die derart übereinander angeordnet sind, daß die Metallschichten in dieselbe Richtung zeigen, die Randstreifen (14) sich aber an entgegengesetzten Längsseiten der Kunststoffolien (12) befinden, in der Weise auf einen Wickelkern (16) gewickelt ist, daß ein Versatz zwischen den Kunststoffolien (12) quer zur Längsseite derselben besteht, wodurch die metallbeschichteten Ränder der beiden Kunststofffolien(12) über die metallfreien Randstreifen (14) überstehen, dadurch gekennzeichnet, daß an beiden Stirnseiten des Kondensatorwickels (10) die jeweils überstehende Kunststoffolie (12) einen Wellenschnitt mit einer jeweiligen Wellenschnittamplitude (19) und Wellenschnittperiode aufweist.

3. Verfahren zur Herstellung eines Kondensatorwickels nach Anspruch 1 oder 2, dadurch gekennzeichnet, daß zwei Kunststoffolien einem Wickelkern mit einem seitlichen Versatz, wodurch die metallbeschichteten Ränder der beiden Kunststoffolien (12) über die metallfreien Randstreifen (14) überstehen, zueinander kontinuierlich zugeführt und auf diesen gewickelt werden, wobei die Zuführrichtungen beider Kunststoffolien im jeweiligen Zuführbereich periodisch um eine jeweilige mittlere Zuführrichtung in der jeweiligen Zuführebene verändert werden.

4. Verfahren zur Herstellung eines Kondensatorwickels nach Anspruch 1 oder 2, dadurch gekennzeichnet, daß zwei Kunststoffolien einem Wickelkern mit einem seitlichen Versatz zueinander kontinuierlich zugeführt und auf diesen gewickelt werden, wobei der Wickelkern und ggf. zugehörige Anpreßrollen periodisch um eine mittlere Lage entlang der Achse des Wickelkerns verschoben wird/werden.

5. Vorrichtung zur Herstellung eines Kondensatorwickels (10) nach Anspruch 1 oder 2, gekennzeichnet durch zwei drehbare Aufnahmeeinrichtungen zur Aufnahme einer jeweiligen Kunststoffolienversorgungsrolle (20), eine drehbare Wickelkernaufnahmeeinrichtung zur Aufnahme des Wickelkerns (16) sowie ggf. vorhandene Anpreßrollen (24), einen Wickelmotor zum Antreiben der Wickelkernaufnahmeeinrichtung und eine Umlenkrolle (22) für jede Kunststoffolienbahn, die sich in unmittelbarer Nähe der Wickelkernaufnahmeeinrichtung befindet und um eine zu ihrer Längsachse senkrechte Achse drehbar ist.

6. Vorrichtung zur Herstellung eines Kondensatorwickels (10) nach Anspruch 1 oder 2, gekennzeichnet durch zwei drehbare Aufnahmeeinrichtungen zur Aufnahme einer jeweiligen Kunststoffolienversorgungsrolle (20), eine drehbare Wickelkernaufnahmeeinrichtung zur Aufnahme des Wickelkerns (16) sowie ggf. vorhandene Anpreßrollen (24), wobei die Wickelkernaufnahmeeinrichtung mitsamt den ggf. vorhandenen Anpreßrollen (24) entlang ihrer Drehachse verschiebbar ist, eine Umlenkrolle (22) für jede Kunststoffolienbahn, die sich in unmittelbarer Nähe der Wickelkernaufnahmeeinrichtung befindet, und einen Wickelmotor zum Antreiben der Wickelkernaufnahmeeinrichtung.

7. Wickelkondensator, gekennzeichnet durch einen Kondensatorwickel (10) nach Anspruch 1 oder 2.
